# EUROPÄISCHE PATENTSCHRIFT

(11) **EP 2 101 934 B1**
(45) Veröffentlichungstag und Bekanntmachung des Hinweises auf die Patenterteilung: **19.01.2011**
(21) Anmeldenummer: 07819689.6
(22) Anmeldetag: 08.11.2007
(51) Int. Cl.: B21C 47/34, B21B 27/08, B21D 43/09, B22D 11/128, B23D 31/00

(54) **TREIBROLLE INSBESONDERE FÜR BESÄUMSCHEREN**
DRIVE ROLLER, IN PARTICULAR FOR EDGE TRIMMERS
GALET D'ENTRAÎNEMENT, NOTAMMENT POUR ROGNAGE À LA CISAILLE

(30) Priorität: 09.12.2006 DE 102006058134
(43) Veröffentlichungstag der Anmeldung: 23.09.2009
(73) Patentinhaber: SMS Siemag AG, 40237 Düsseldorf (DE)
(72) Erfinder: BEUTER, Matthias, 57319 Bad Berleburg (DE); MEINHARDT, Ulrich, 57271 Hilchenbach (DE)
(74) Vertreter: Klüppel, Walter
(86) Internationale Anmeldenummer: PCT/EP2007/009680
(87) Internationale Veröffentlichungsnummer: WO 2008/067886

(56) Entgegenhaltungen:
- EP-A- 0 470 436
- WO-A-93/19874
- CH-A- 412 139
- DE-A1- 3 542 007
- DE-A1- 4 025 872
- DE-A1- 19 652 388
- DE-C1- 10 006 630

## Beschreibung

### Technisches Gebiet

Die Erfindung betrifft eine Treibrolle insbesondere für Besäumscheren zur Verwendung bei der Herstellung von Blechen und hierbei insbesondere von warmen Blechen oder Bändern im Grobblechbereich oder im Warmbandbereich. Eine Treibrolle gemäß dem Oberbegriff des Anspruchs 1 ist z.B. aus der EP-A-0470436 bekannt.

### Stand der Technik

Treibrollen werden insbesondere in Besäumscheren zur Bearbeitung von Blechen verwendet, wobei die Treibrollen zum Transport von Blechen in solchen Blechbearbeitungsanlagen verwendet werden. Dazu sind Treibrollen durch die DE 35 42 007 A1 oder die WO 02/36294 A1 bekannt geworden. Bei Besäumscheren werden die Treibrollen insbesondere zum Transport oder zum Ausrichten von Blechen in zum Besäumen und/oder Längs- oder Querverteilen geeigneten Scheren verwendet. Bekannt ist die Verwendung von solchen Treibrollen für die Verarbeitung von kalten Blechen. Die Treibrollen sind dabei jeweils paarweise angeordnet und führen zwischen sich ein zu transportierendes Blech, wobei die Treibrollen gegen das Blech angestellt sind und aufgrund ihrer angetriebenen Drehung das Blech transportiert werden kann.

Die in Besäumscheren verwendeten Treibrollen sind bei der Bearbeitung von warmem Blech in ständigem Kontakt mit dem warmen zu bearbeitenden Blech und werden dabei von dem Blech selbst stark erhitzt. Durch den ständigen Energieeintrag in die Treiberrollen überhitzen diese und verlieren damit ihre Funktionsfähigkeit oder erleiden einen Defekt, der bis zur Zerstörung der Treibrollen führen kann.

### Darstellung der Erfindung, Aufgabe, Lösung, Vorteile

Aufgabe der Erfindung ist es, eine oben genannte Treibrolle zu schaffen, die den Anforderungen eines Einsatzes insbesondere in Besäumscheren für warme Bänder oder Bleche genügt und diesbezüglich eine hohe Einsatzfähigkeit aufweist.

Erfindungsgemäß wird die Aufgabe durch eine Treibrolle mit den Merkmalen von Anspruch 1 gelöst. Dadurch kann vorteilhaft erreicht werden, dass eine Kühlung der Oberfläche der Laufrolle realisiert wird, so dass insgesamt der Energieeintrag in die Laufrolle minimiert wird.

Weitere vorteilhafte Ausgestaltungen sind in den abhangigem Ansprüchen definiert.

Weiterhin wird die Aufgabe gelöst bei Besäumschere mit einer Treibrollenvorrichtung mit zumindest zwei Treibrollen nach einem der Ansprüche 1 bis 3.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: eine Schnittdarstellung einer Treibrolle,
- Fig. 2: einen Schnitt durch die Treibrolle gemäß Figur 1,
- Fig. 3: eine Seitenansicht der Treibrolle gemäß Figur 1,
- Fig. 4: einen Satz Treibrollen und
- Fig. 5: eine Seitenansicht der Treibrollen gemäß Figur 4.

### Bevorzugte Ausführung der Erfindung

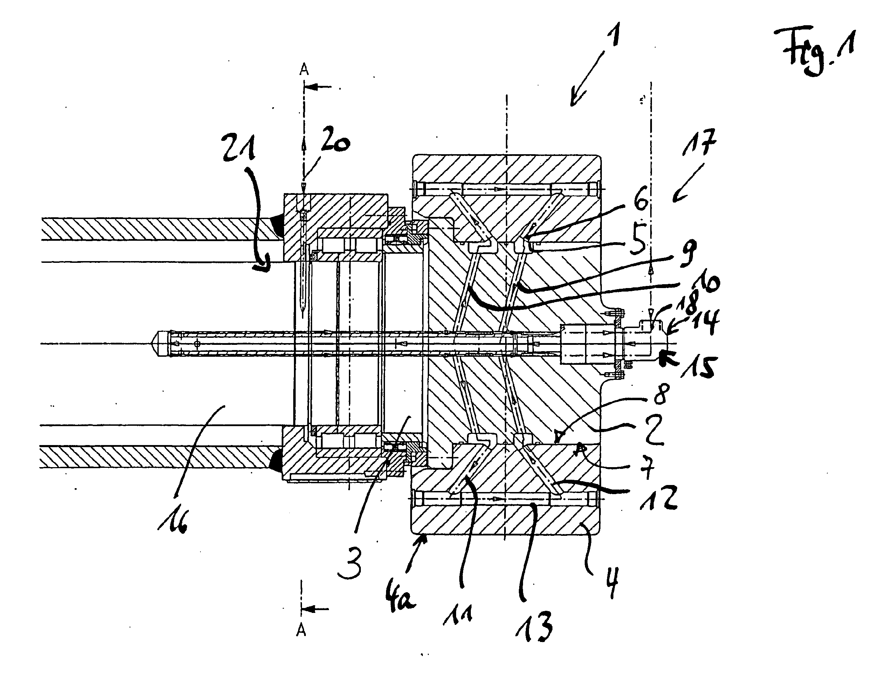

Die Figur 1 zeigt eine Darstellung eines Schnitts durch eine Treibrolle 1. Die Treibrolle 1 besteht im Wesentlichen aus einem mit einem Lagerzapfen 3 versehenen Nabenteil 2 und einer mit dem Lagerzapfen 3 verbindbaren Laufrolle 4. Die Laufrolle 4 ist auf dem Lagerzapfen mittels eines Lagers drehbar gelagert.

Sowohl der Nabenteil 2 und/oder die Laufrolle 4 weisen zumindest im Wesentlichen ringförmige Kanäle auf. Diese ringförmigen Kanäle 5,6 sind im Wesentlichen auf der Außenfläche 7 des Nabenteils 2 und auf der Innenfläche 8 der Laufrolle 4 vorgesehen. Gemäß dem Ausführungsbeispiel der Figur 1 sind die ringförmigen Kanäle 5,6 als Ringnuten in der Außenfläche 7 und in der Innenfläche 8 ausgebildet.

Ausgehend von diesen ringförmigen Kanälen 5,6 sind nach radial innen des Nabenteils 2 bzw. nach radial außen der Laufrolle 4 Kanäle 9,10,11,12 vorgesehen, welche ein Kühlfluid verteilen. Dabei sind erfindungsgemäß diese Kanäle sowohl radial als auch axial ausgerichtet. Die Kanäle 9,10 dienen als Zufuhrkanal 10 bzw. Abfuhrkanal 9 zu den ringförmigen Kanälen 5,6, wobei das Fluid zur Kühlung über einen zentralen vorteilhaft achsmittigen Anschluss für Zufuhr und Abfuhr 14,15 zugeführt wird. Die Kanäle 11,12 dienen der Zufuhr des Kühlfluids ausgehend von den ringförmigen Kanälen 5,6 und werden auf in axialer Richtung ausgerichtete und unter der Oberfläche der Laufrolle 4 angeordnete Kanäle 13 verteilt. Da der Wärmeeintrag in die Laufrolle 4 im Wesentlichen von der Oberfläche 4a der Laufrolle 4 aus erfolgt, dient die axiale Anordnung einer Mehrzahl von Kanälen 13 der verbesserten Verteilung der Kühlfluidströmung in der Laufrolle 4. Die Kanäle 13 verlaufen im Wesentlichen achsparallel zur Achse der Laufrolle 4, wobei sie vorteilhaft auch parallel zur Oberfläche bzw. Abrollfläche 4a der Laufrolle 4 verlaufen.

Vorteilhaft sind die Zufuhr- bzw. Abfuhrkanäle 14,15 von einer der Antriebsseite 16 gegenüberliegenden Seite 17 mit Kühlfluid versorgt. Hierzu ist ein Anschlussflansch 18 vorgesehen, welcher mit einer nicht dargestellten Zufuh- und Abfuhrleitung versehen bzw. verbindbar ist. Innerhalb der Treibrolle 1 sind die Zufuhr- und Abfuhrkanäle als Doppelrohr ausgebildet, so dass im inneren der Zufuhrkanal versorgt wird und in einem Außenmantel der Abfuhrkanal versorgt wird.

Die Figur 1 zeigt weiterhin zur Kühlung des Lagergehäuses einen Kühlfluidanschluss 20, welcher die Zufuhr bzw. Abfuhr eines Kühlfluids zur Kühlung des Lagergehäuses 21 gewährleistet.

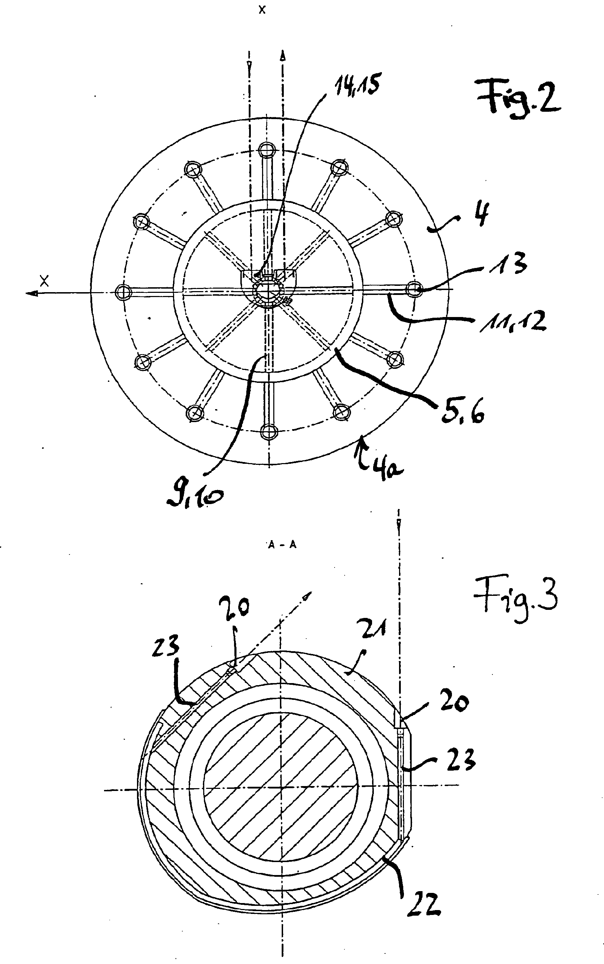

Bei einem vorteilhaften Ausführungsbeispiel kann die Versorgung der Treibrolle 4 mit Kühlfluid mit der Versorgung des Lagergehäuses 21 mit Kühlfluid gekoppelt sein. Dazu kann eine Fluidverbindung zwischen den Kanälen zur Kühlung des Lagergehäuses und der Treibrolle vorgesehen sein. Bei einem weiteren Ausführungsbeispiel kann diese Fluidversorgung auch getrennt speisbar sein. Die Figur 2 zeigt eine Treibrolle 4 im Schnitt. Dabei sind die Kanäle 13 in der Treibrolle 4 zur Verteilung des Kühlfluids parallel zur Oberfläche 4a der Treibrolle 4 ausgerichtet. Diese Kanäle 13 sind mittels der Kanäle 11,12 verbunden, wobei jeweils eine Zufuhrverbindung 11 und eine Abfuhrverbindung 12 vorgesehen ist, die im Wesentlichen radial verlaufen. Die Kanäle 13 sind im Wesentlichen sternförmig verteilt. Ausgehend von dem zentralen mittigen Anschluss 14,15 wird das Kühlfluid mittels der Kanäle 9,10 zu den ringförmigen Kanälen 5,6 zum Verteilen geführt bzw. abgeführt, von wo das Kühlfluid auf die Zu- bzw. Abfuhrkanäle verteilt wird bzw. von diesen gesammelt und abgeführt wird.

Die Figur 3 zeigt zur Kühlung des Lagergehäuses 21 einen Kühlfluidanschluss 20 für die Zufuhr und Abfuhr eines Kühlfluids zur Kühlung des Lagergehäuses 21, wobei das Fluid durch den oberflächennahen Kanal 22 von der Zufuhr zum Abfluss strömt. Der oberflächennahe Kanal ist dabei durch eine abgedeckte Vertiefung gebildet, die an ihren Zufuhr- bzw. Abfuhrseiten mittels Bohrungen 23 mit dem Anschluss 20 verbunden sind.

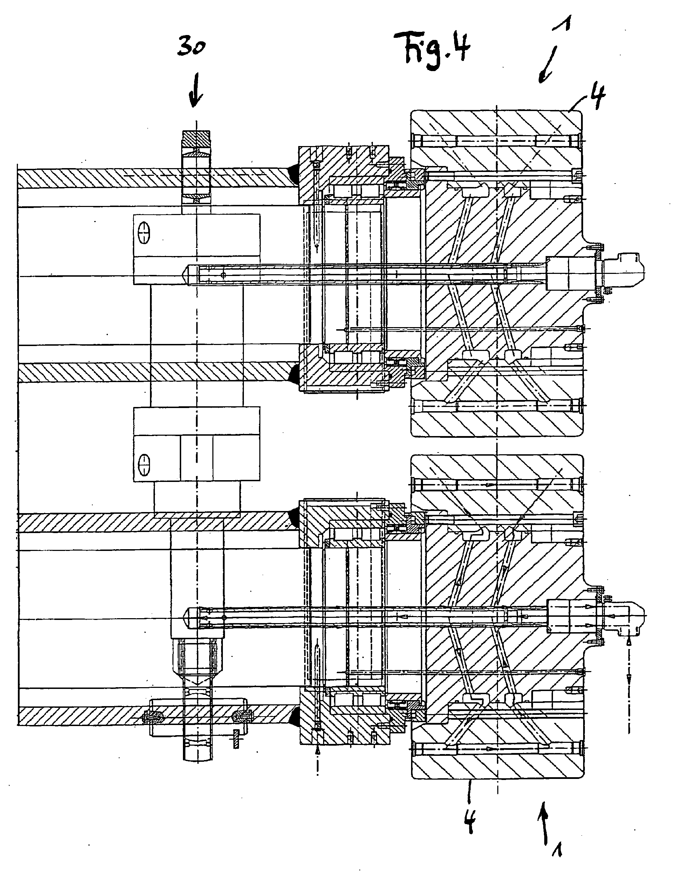

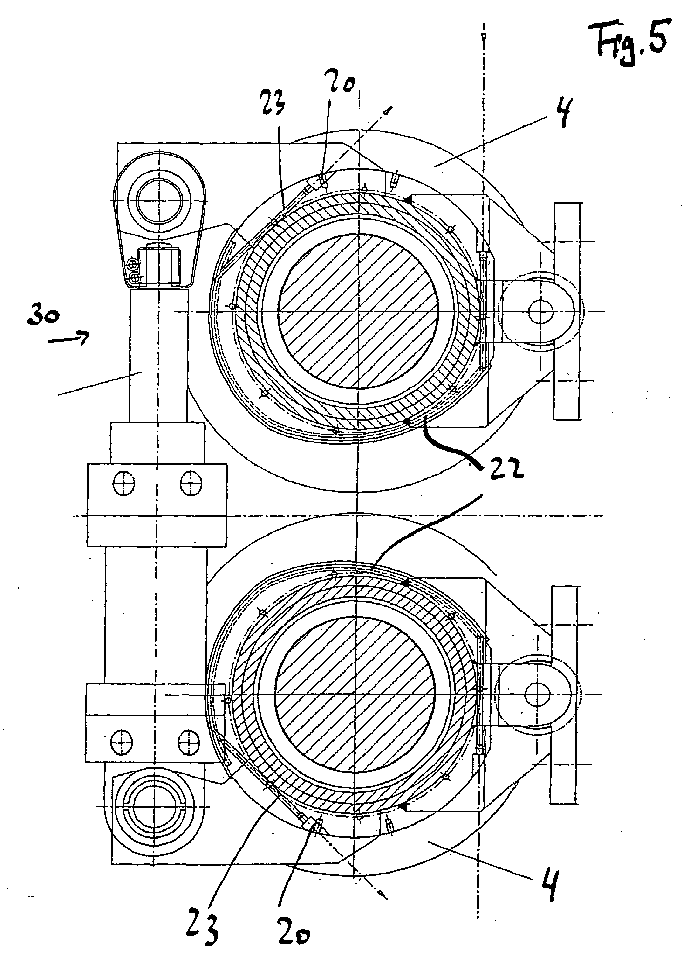

Die Figuren 4 und 5 zeigen jeweils zwei Treibrollen 1, die mittels eines Verstellmechanismus 30 zueinander verstellbar und einstellbar sind, so dass zwischen den beiden Laufrollen 4 ein Blech unter Andruck oder Vorspannung gegen die Laufrollen durchgeführt werden kann.

### Bezugszeichenliste

- 1: Treibrolle
- 2: Nabenteil
- 3: Lagerzapfen
- 4: Laufrolle
- 4a: Oberfläche
- 5: Kanal
- 6: Kanal
- 7: Außenfläche
- 8: Innenfläche
- 9: Kanal
- 10: Kanal
- 11: Kanal
- 12: Kanal
- 13: Kanal
- 14: Anschluss
- 15: Anschluss
- 16: Antriebsseite
- 17: gegenüberliegende Seite
- 18: Anschlussflansch
- 20: Kühlfluidanschluss
- 21: Lagergehäuse
- 22: Kanal
- 23: Bohrung
- 30: Verstellmechanismus

## Patentansprüche

1. Treibrolle (1) insbesondere für Besäumscheren insbesondere zur Verwendung bei der Herstellung von Blechen oder Bändern und hierbei insbesondere im Grobblechbereich oder im Warmbandbereich, mit einem mit einem Lagerzapfen (3) versehenen Nabenteil (2) und einer mit dem Lagerzapfen (3) über das Nabenteil (2) verbundenen Laufrolle (4), wobei die Laufrolle (4) mit einer Vielzahl von Kanälen (13) zum Führen eines Kühlfluids ausgebildet ist, die Kanäle (13) parallel zur Oberfläche (4a) der Laufrolle (4) angeordnet sind und den Kanälen ein Fluid mittels erster Verbindungskanäle (11,12) zu- oder abführbar ist, wobei
die ersten Verbindungskanäle im Wesentlichen axial und sternförmig nach radial außen der Laufrolle (4) ausgerichtet sind, und zweite Verbindungskanale (9,10) vorgesehen sind, wobei die ersten und die zweiten Verbindungskanäle über im Wesentlichen ringförmig umlaufende Kanäle (5,6) verbunden sind, welche im Grenzbereich zwischen dem Nabenteil (2) und der Laufrolle (4) ausgebildet sind, **dadurch gekennzeichnet, dass** die zweiten Verbindungskanäle (9,10) axial und sternförmig nach radial innen des Nabenteils (2) angeordnet sind.

2. Treibrolle (1) nach Anspruch 1 **dadurch gekennzeichnet,**
**dass** der Lagerzapfen (3) in einem Lagergehäuse (21) angeordnet ist und das Lagergehäuse zur Kühlung mittels eines Fluids weiterhin Fluidkanäle (22) aufweist.

3. Treibrolle (1) nach Anspruch 2,
**dadurch gekennzeichnet,**
**dass** die Fluidkanäle (13) der Laufrolle (4) mit den Fluidkanälen (22) des Lagergehäuses (21) in Fluidverbindung stehen.

4. Besäumschere mit einer Treibrollenvonichtung mit zumindest zwei Treibrollen nach einem der vorhergehenden Ansprüche, wobei die Treibrollen im Ein- und/oder Auslaufbereich der Besäumschere derart anordenbar sind, dass sie oberhalb und/oder unterhalb eines zwischen ihnen aufzunehmenden warmen Bandes oder Bleches angeordnet sind.

## Claims

1. Drive roller (1), particularly for trimming shears, especially for use in the production of sheets or strips and in this connection particularly in the field of heavy plate or in the field of hot strip, comprising a hub part (2), which is provided with a bearing pin (3), and a guide roller (4), which is connected with the bearing pin (3) by way of the hub part (2), wherein the guide roller (4) is formed with a plurality of channels (13) for conducting a cooling fluid, the channels (13) are arranged parallel to the surface (4a) of the guide roller (4) and a fluid can be conducted to or away from the channels by means of first connecting channels (11, 12), wherein the first connecting channels are oriented substantially axially and in star shape radially outwardly of the guide roller (4), and second connecting channels (9, 10) are provided, wherein the first and the second connecting channels are connected by way of substantially annularly extending channels (5, 6) formed in the boundary region between the hub part (2) and the guide roller (4), **characterised in that** the second connecting channels (9, 10) are arranged axially and in star shape radially inwardly of the hub part (2).

2. Drive roller (1) according to claim 1, **characterised in that** a bearing pin (3) is arranged in a bearing housing (21) and the bearing housing additionally has fluid channels (22) for cooling by means of a fluid.

3. Drive roller (1) according to claim 2, **characterised in that** the fluid channels (13) of the guide roller (4) are disposed in fluid connection with the fluid channels (22) of the bearing housing (21).

4. Trimming shears with a drive roller device with at least two drive rollers according to any one of the preceding claims, wherein the drive rollers can be so arranged in the inlet and/or outlet region of the trimming shears that they are arranged above and/or below a hot strip or sheet to be received between them.

## Revendications

1. Galet d'entraînement (1), en particulier pour des cisailles de rognage et en particulier pour l'utilisation lors de la fabrication de tôles ou de feuillards et ici en particulier dans le secteur des tôles brutes ou le secteur des feuillards produits à chaud, comprenant une partie formant moyeu (2) dotée d'un tourillon de palier (3) et un galet rotatif (4) relié au tourillon de palier (3) via la partie formant moyeu (2), dans lequel le galet rotatif (4) est réalisé avec une pluralité de canaux (13) pour le passage d'un fluide de refroidissement, lesdits canaux (13) étant agencés parallèlement à la surface (4a) du galet rotatif (4), et un fluide pouvant être alimenté ou évacué des canaux au moyen de premiers canaux de liaison (11, 12), dans lequel les premiers canaux de liaison sont orientés sensiblement axialement et en forme d'étoile radialement vers l'extérieur du galet rotatif (4), et il est prévu des seconds canaux de liaison (9, 10), tels que les premiers et les seconds canaux de liaison sont reliés via des canaux (5, 6) s'étendant sensiblement en forme d'anneau et qui sont réalisés dans la zone frontière entre la partie formant moyeu (2) et le galet rotatif (4), **caractérisé en ce que** les seconds canaux de liaison (9, 10) sont agencés axialement et en forme d'étoile radialement vers l'intérieur de la partie formant moyeu (2).

2. Galet d'entraînement (1) selon la revendication 1, **caractérisé en ce que** le tourillon de palier (3) est agencé dans un boîtier de palier (21), et pour le refroidissement au moyen d'un fluide, le boîtier de palier comprend en outre des canaux à fluide (22).

3. Galet d'entraînement (1) selon la revendication 2, **caractérisé en ce que** les canaux à fluide (13) du galet rotatif (4) sont en liaison fluidique avec les canaux à fluide (22) du boîtier de palier (21).

4. Cisaille de rognage comprenant un dispositif à galet d'entraînement doté d'au moins deux galets d'entraînement selon l'une des revendications précédentes, dans laquelle les galets d'entraînement peuvent être agencés dans la zone d'entrée/ou de sortie de la cisaille de rognage de telle façon qu'ils sont agencés au-dessus et/ou au-dessous d'un feuillard ou d'une tôle à chaud destiné(e) à être pris(e) entre eux.
